# EUROPÄISCHE PATENTSCHRIFT

(11) **EP 2 060 824 B1**
(45) Veröffentlichungstag und Bekanntmachung des Hinweises auf die Patenterteilung: **27.01.2010**
(21) Anmeldenummer: 08168347.6
(22) Anmeldetag: 05.11.2008
(51) Int. Cl.: F16F 15/16

(54) **Torsionsschwingungsdämpferanordnung**
Torsion vibration damper device
Agencement d'amortisseur de vibrations de torsions

(30) Priorität: 15.11.2007 DE 102007054567
(43) Veröffentlichungstag der Anmeldung: 20.05.2009
(73) Patentinhaber: ZF Friedrichshafen AG, 88038 Friedrichshafen (DE)
(72) Erfinder: Dögel, Thomas, 97688 Bad Kissingen (DE)

(56) Entgegenhaltungen:
- DE-A1-102005 058 531
- FR-A- 1 346 685

## Beschreibung

Die vorliegende Erfindung betrifft eine Torsionsschwingungsdämpferanordnung, umfassend eine Primärseite und eine gegen die Wirkung einer Dämpferfluidanordnung um eine Drehachse bezüglich der Primärseite drehbare Sekundärseite, wobei die Dämpferfluidanordnung in wenigstens einer Verdrängungskammer ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von Fluid aus dieser das zweite Dämpferfluid in wenigstens einer Ausgleichskammer komprimiert wird, wobei die wenigstens eine Verdrängungskammer begrenzt ist durch eine erste Verdrängungskammerbaugruppe, welche die wenigstens eine Verdrängungskammer mit Stirnwandungen in beiden axialen Richtungen und mit einer Umfangswandung in einer radialen Richtung begrenzt, und durch eine zweite Verdrängungskammerbaugruppe, welche bezüglich der ersten Verdrängungskammerbaugruppe um die Drehachse drehbar ist und die wenigstens eine Verdrängungskammer in der anderen radialen Richtung begrenzt.

Das Dokument DE 10 2005 058531 A1 offenbart eine

Torsionsschwingungsdämpferanordnung gewäß Oberbegriff des Anspruch 1. Bei derartigen Torsionsschwingungsdämpferanordnungen besteht grundsätzlich die Gefahr, dass bei zu stark ansteigenden zu übertragenden Drehmomenten bzw. zu großen Drehmomentspitzen bei Drehmomentschwankungen ein gegenseitiges Anschlagen von die wenigstens eine Verdrängungskammer begrenzenden Abschnitten der beiden Verdrängungskammerbaugruppen erzeugt wird. Auch sind in den Verdrängungskammerbaugruppen verschiedene Öffnungen vorhanden, welche der Zufuhr bzw. Abfuhr von erstem Dämpferfluid dienen und bei zu starker Relativdrehung zwischen Primärseite und Sekundärseite durch an der jeweils anderen Verdrängungskammerbaugruppe vorgesehene Dichtungselemente überstrichen werden können. Dies kann kurzzeitig zu einem Fluidübertragungskurzschluss zwischen zwei Verdrängungskammern führen und kann bei häufig auftretender Wiederholung zu einer Beschädigung von Dichtungselementen führen.

Es ist die Aufgabe der vorliegenden Erfindung, eine Torsionsschwingungsdämpferanordnung vorzusehen, bei welcher ohne Beeinträchtigung der fluidischen Dämpfungsfunktionalität die Möglichkeit gegeben ist, die Relativbewegung der Primärseite und der Sekundärseite in einem ungünstige Betriebszustände oder eine Beschädigung vermeidenden Ausmaß zu halten.

Erfindungsgemäß wird diese Aufgabe gelöst durch eine Torsionsschwingungsdämpferanordnung, umfassend eine Primärseite und eine gegen die Wirkung einer Dämpferfluidanordnung um eine Drehachse bezüglich der Primärseite drehbare Sekundärseite, wobei die Dämpferfluidanordnung in wenigstens einer Verdrängungskammer ein erstes Dämpferfiuid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von Fluid aus dieser das zweite Dämpferfluid in wenigstens einer Ausgleichskammer komprimiert wird, wobei die wenigstens eine Verdrängungskammer begrenzt ist durch eine erste Verdrängungskammerbaugruppe, welche die wenigstens eine Verdrängungskammer mit Stirnwandungen in beiden axialen Richtungen und mit einer Umfangswandung in einer radialen Richtung begrenzt, und durch eine zweite Verdrängungskammerbaugruppe, welche bezüglich der ersten Verdrängungskammerbaugruppe um die Drehachse drehbar ist und die wenigstens eine Verdrängungskammer in der anderen radialen Richtung begrenzt, wobei an einer Baugruppe von zweiter Verdrängungskammerbaugruppe und wenigstens eine der Stirnwandungen wenigstens eine Umfangsaussparung vorgesehen ist und an der anderen Baugruppe von zweiter Verdrängungskammerbaugruppe und wenigstens eine der Stirnwandungen in Zuordnung zu der wenigstens einen Umfangsaussparung ein Eingriffsvorsprung vorgesehen ist zur Erzeugung einer Drehwinkelbegrenzungsfunktion oder/und einer Reibeinrichtungsfunktion zwischen den beiden Verdrängungskammerbaugruppen.

Bei der vorliegenden Erfindung ist in einem Bereich außerhalb der wenigstens einen Verdrängungskammer dafür gesorgt, dass durch eine Verdrehwinkelbegrenzungsfunktion eine übermäßige Relativdrehung zwischen Primärseite und Sekundärseite vermieden wird oder/und durch das Einführen einer Reibfunktion bei der Relativdrehung zwischen der Primärseite und der Sekundärseite Energie abgebaut wird und somit einer übermäßigen Verdrehung ebenfalls entgegengewirkt werden kann. Da diese Maßnahmen in einem Bereich bereitgestellt sind, in welchem die beiden Verdrängungskammerbaugruppen einander gegenüberliegen, also nicht innerhalb der Verdrängungskammer selbst, bleibt deren Aufbau, Volumen und somit Dämpfungscharakteristik unbeeinträchtigt.

Die wenigstens eine Umfangsaussparung ist vorzugsweise an einer Stirnfläche der einen Baugruppe ausgebildet.

Zur Bereitstellung einer Umfangsbewegungsbegrenzung von Primärseite und Sekundärseite bezüglich einander wird weiter vorgeschlagen, dass die wenigstens eine Umfangsaussparung eine begrenzte Umfangserstreckung aufweist.

Um bei Wirksamwerden der Drehbegrenzungsfunktionalität ein zu starkes Abbremsen zu vermeiden, wird vorgeschlagen, dass im Bereich wenigstens eines Umfangsendes wenigstens einer Umfangsaussparung ein elastischer Anschlag für einen Eingriffsvorsprung vorgesehen ist. Dabei kann beispielsweise vorgesehen sein, dass der elastische Anschlag ein Federelement umfasst.

Das Federelement kann dabei vorgespannt eingebaut sein, so dass ein gewisses Anschlagmoment bzw. Belastungsmoment überschritten werden muss, um dieses Federelement mit seiner elastischen Funktionalität wirksam werden zu lassen.

Alternativ oder zusätzlich kann bei der erfindungsgemäßen Torsionsschwingungsdämpferanordnung eine Reibfunktionalität dadurch realisiert werden, dass in Zuordnung zu wenigstens einem Eingriffsvorsprung der anderen Baugruppe an der einen Baugruppe ein Reibelement vorgesehen ist, welches durch den Eingriffsvorsprung zur Bewegung in Umfangsrichtung entlang wenigstens einer Gegenreibfläche mitnehmbar ist. Insbesondere dann, wenn bei derartiger Ausgestaltung der wenigstens eine Eingriffsvorsprung auch in Zusammenwirkung mit der einen Baugruppe eine Umfangsbewegungsbegrenzungsfunktionalität vorsieht, kann eine Funktionenverschmelzung bei sehr einfachem Aufbau realisiert werden.

Beispielsweise kann vorgesehen sein, dass an der einen Baugruppe eine Reibelementenaufnahmeaussparung vorgesehen ist.

Um eine stabile Integration der Reibfunktionalität in die eine Baugruppe zu realisieren, wird vorgeschlagen, dass die Reibelementenaufnahmeaussparung durch ein vorzugsweise eine Gegenreibfläche bereitstellendes und durch den wenigstens einen Eingriffsvorsprung zur Wechselwirkung desselben mit dem zugeordneten Reibelement übergriffenes Abschlusselement teilweise abgeschlossen ist.

Dabei kann dann das Abschlusselement die wenigstens eine Umfangsaussparung begrenzen. Ist diese Umfangsaussparung beispielsweise in Umfangsrichtung ununterbrochen, wird primär eine Reibfunktionalität bereitgestellt. Ist diese Umfangsaussparung in Umfangsrichtung begrenzt, dann erfüllt das Abschlusselement gleichzeitig auch die Funktionalität einer Drehwinkelbegrenzung, stellt also einen Bewegungsanschlag für den wenigstens einen Eingriffsvorsprung bereit.

Um im Bereich kleiner Drehmomente bzw. Drehmomentschwankungen einen Reibbeitrag zur Schwingungsdämpfung zu unterdrücken, wird vorgeschlagen, dass der wenigstens eine Eingriffsvorsprung mit dem zugehörigen Reibelement mit Umfangsbewegungsspiel zusammenwirkt.

Ferner kann der Aufbau der erfindungsgemäßen Torsionsschwingungsdämpferanordnung derart sein, dass die wenigstens eine Verdrängungskammer in einer ersten Umfangsrichtung durch einen an der ersten Verdrängungskammerbaugruppe vorgesehenen Umfangsbegrenzungsvorsprung und in einer zweiten Umfangsrichtung durch einen an der zweiten Verdrängungskammerbaugruppe vorgesehenen Umfangsbegrenzungsvorsprung begrenzt ist.

Die vorliegende Erfindung wird nachfolgend mit Bezug auf die beiliegenden Figuren näher beschrieben. Es zeigt:
- Fig. 1: eine Längsschnittansicht eines Abschnitts eines Antriebsstrangs mit einer nach Art eines Gasfeder-Zweimassenschwungrads aufgebauten Torsionsschwingungsdämpferanordnung;
- Fig. 2: eine Querschnittansicht der Torsionsschwingungsdämpfer- anordnung der Fig. 1;
- Fig.3: die beiden Verdrängungskammerbaugruppen der Torsions- schwingungsdämpferanordnung detaillierter;
- Fig. 4: eine Stirnansicht einer in Fig. 3 gezeigten zweiten Verdrängungs- kammerbaugruppe;
- Fig. 5: eine Schnittansicht der in Fig. 3 gezeigten Verdrängungskammer- baugruppen, geschnitten längs einer Linie V-V in Fig. 3;
- Fig. 6: eine der Fig. 5 entsprechende Darstellung einer alternativen Ausgestaltungsart;
- Fig. 7: eine weitere der Fig. 5 entsprechende Ansicht einer alternativen Ausgestaltungsart;
- Fig. 8: einen elastischen Anschlag für die in Fig. 7 gezeigte Anordnung;
- Fig. 9: ein Diagramm, welches aufgetragen über den Relativdrehwinkel zwischen Primärseite und Sekundärseite das übertragene Drehmoment darstellt;
- Fig. 10: eine Teil-Längsschnittansicht einer alternativen Ausgestaltungsart einer zweiten Verdrängungskammerbaugruppe;
- Fig. 11: eine vergrößerte Teilansicht der in Fig. 10 gezeigten zweiten Verdrängungskammerbaugruppe in Wechselwirkung mit einer ersten Verdrängungskammerbaugruppe;
- Fig. 12: in linearer Abwicklung eine Teil-Stirnansicht der in Fig. 11 gezeigten Verdrängungskammerbaugruppen.

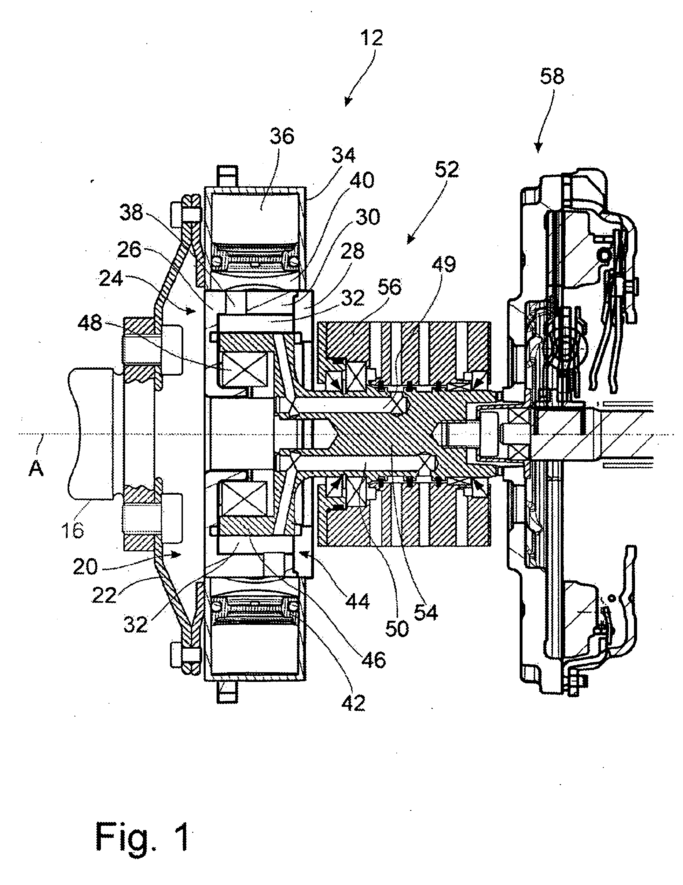

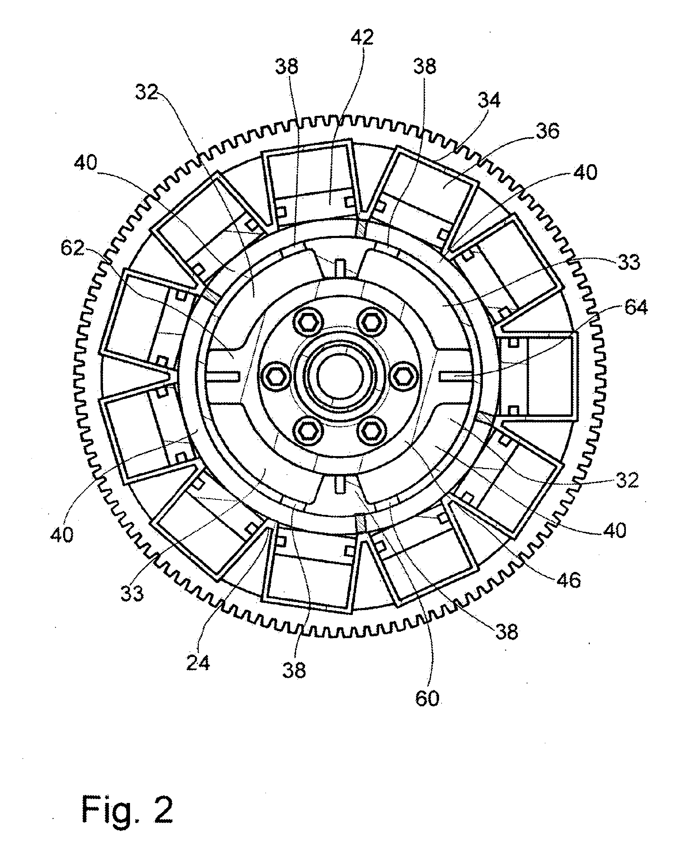

Zunächst wird mit Bezug auf die Fig. 1 und 2 der allgemeine Aufbau einer nach Art eines Gasfeder-Zweimasschenschwungrads wirksamen Torsionsschwingungsdämpferanordnung 12 beschrieben.

Die Torsionsschwingungsdämpferanordnung 12 umfasst eine Primärseite 20, welche über eine Flexplattenanordnung 22 o. dgl. mit der Antriebswelle 16 zur gemeinsamen Drehung um die Drehachse A gekoppelt bzw. koppelbar ist. Diese Primärseite 20 wiederum umfasst eine erste Verdrängungskammerbaugruppe 24, die mit zwei Stirnwänden 26, 28 und einer Außenumfangswand 30 eine Mehrzahl von in Umfangsrichtung aufeinander folgenden Verdrängungskammern 32, 33 axial und nach radial außen begrenzt. An der Außenseite der Außenumfangswand 30 ist eine bezüglich der Drehachse A sternförmige Anordnung von Ausgleichszylindern 34 vorgesehen, in welchen jeweils eine Ausgleichskammer 36 gebildet ist. Die Zuordnung kann derart sein, dass jeder Verdrängungskammer 32, 33 eine Ausgleichskammer 36 zugeordnet ist, oder dass einer Verdrängungskammer 32 mehrere Ausgleichskammern 36 zugeordnet sind, oder dass eine Ausgleichskammer 36 mit mehreren Verdrängungskammern 32, 33 zusammenwirkt. Diese Zusammenwirkung erfolgt über eine in Zuordnung zu jeder Verdrängungskammer 32, 33 vorgesehenen Durchgangsöffnung 38 in der Außenumfangswand 30 sowie eine in Umfangsrichtung entlang der Außenumfangswand 28 sich erstreckende Verbindungskammer 40. Ein jeweiliger in dem Ausgleichszylinder 34 bewegbarer Trennkolben 42 trennt das in der bzw. den Verdrängungskammern 32, 33 enthaltene erste Dämpferfluid, das im Wesentlichen nicht kompressibel ist und beispielsweise Öl sein kann, von dem in der zugeordneten Ausgleichskammer 36 enthaltenen zweiten Dämpferfluid, das kompressibel ist, beispielsweise Luft oder ein anderes Gas sein kann.

Eine Sekundärseite 44 der Torsionsschwingungsdämpferanordnung 12 umfasst eine zweite Verdrängungskammerbaugruppe 46, welche über ein Lager 48 an der ersten Verdrängungskammerbaugruppe 24 drehbar gelagert ist. Die zweite Verdrängungskammerbaugruppe 46 begrenzt die Verdrängungskammern 32 nach radial innen und ist über entsprechende Dichtungsanordnungen bezüglich den Seitenwänden 26, 28 fluiddicht geführt.

Um die Verdrängungskammern 32, 33 in Umfangsrichtung zu begrenzen, sind an den beiden Verdrängungskammerbaugruppen 24 bzw. 46 jeweils radial auf die andere Verdrängungskammerbaugruppe zu sich erstreckende Umfangsbegrenzungsvorsprünge vorgesehen, so dass jede Verdrängungskammer 32 durch einen Umfangsbegrenzungsvorsprung 60 der primärseitigen ersten Verdrängungskammerbaugruppe 24 begrenzt ist und einen Umfangsbegrenzungsvorsprung 62 der sekundärseitigen zweiten Verdrängungskammerbaugruppe 46 begrenzt ist. Bei Relativdrehung der Primärseite 20 bezüglich der Sekundärseite 44 in einer ersten Relativdrehrichtung wird beispielsweise das Volumen der in der Fig. 1 oben liegenden Verdrängungskammer 32 verringert, so dass erstes Dämpferfluid aus dieser in die zugeordnete Verbindungskammer 40 verdrängt wird und das zweite Dämpferfluid in einer oder mehreren Ausgleichskammern 36 komprimiert wird, während entsprechend das Volumen einer anderen Verdrängungskammer zunimmt. Bei Relativdrehung in der entgegengesetzten Relativdrehrichtung wird dann das Volumen der anderen Verdrängungskammer verringert, so dass das aus dieser verdrängte erste Dämpferfluid zweites Dämpferfluid in zugeordneten Ausgleichskammern 36 belastet. Es sei darauf hingewiesen, dass selbstverständlich die beiden Verdrängungskammerbaugruppen 24, 46 eine Mehrzahl, beispielsweise vier in Umfangsrichtung aufeinander folgende Verdrängungskammern begrenzen können, von welchen jeweils zwei parallel wirken, also gleichzeitig in ihrem Volumen verringert bzw. vergrößert werden.

Zur Einstellung der Dämpfungscharakteristik bzw. der Druckverhältnisse des ersten Dämpferfluids in den Verdrängungskammern 32, 33 kann diesen über in den Fig. 1 und 2 erkennbare Kanäle 49, 50 erstes Dämpferfluid zugeführt bzw. von diesen abgezogen werden. Hierzu dient weiterhin eine allgemein mit 52 bezeichnete Drehdurchführung, deren rotierender Teil 54 in Verbindung ist mit der zweiten Verdrängungskammerbaugruppe 46, und deren nicht rotierender Teil 56, in Verbindung mit einer Druckfluidquelle für erstes Dämpferfluid bzw. einem Reservoir ist. Durch hier nicht dargestellte Ventilanordnungen kann dafür gesorgt werden, dass in den verschiedenen Verdrängungskammern 32, 33 der Fluiddruck des ersten Dämpferfluids erhöht bzw. verringert wird, so dass auf diese Art und Weise die Dämpfungscharakteristik beeinflusst werden kann, da auch der Vorspanndruck, welchen das erste Dämpferfluid auf die Trennkolben 42 ausübt, welcher auf das grundsätzlich unter Überdruck bezüglich der Umgebung gehaltene zweite Dämpferfluid in den Ausgleichskammern 36 einwirkt, veränderbar ist.

Der rotierende Teil 54 der Drehdurchführung kann durch eine Axialverzahnung beispielsweise Stirnverzahnung, mit einer Reibungskupplung 58 zur gemeinsamen Drehung gekoppelt sein. Es sei darauf hingewiesen, dass die Reibeinrichtung 58 nur ein Beispiel einer derartigen im Antriebsstrang dann folgenden Trenn/Anfahr-Einrichtung darstellt. Hier könnte selbstverständlich auch ein hydrodynamischer Drehmomentwandler, eine nasslaufende Reibeinrichtung oder im Falle eines Hybridantriebs eine Elektromaschine folgen.

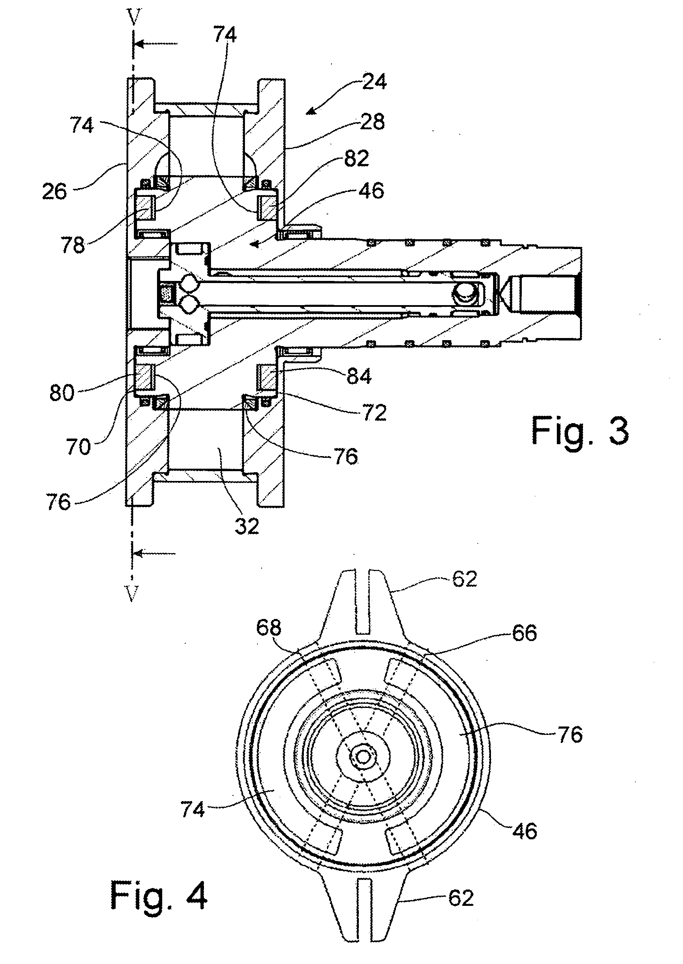

In Fig. 2 erkennt man die sternartig um die Drehachse A angeordneten Ausgleichskolben 34 mit den darin ausgebildeten Ausgleichskammern 36. Diese können an einer gemeinsamen Baugruppe vorgesehen sein. Es sind ferner jeweils zwei einander paarweise zugeordnete Verdrängungskammern 32, 32 bzw. 33, 33 vorgesehen. Diese sind in Umfangsrichtung jeweils begrenzt zwischen einem primärseitigen Umfangsbegrenzungsvorsprung 60 und einem sekundärseitigen Umfangsbegrenzungsvorsprung 62. Diese erstrecken sich in radialer Richtung jeweils auf die andere Verdrängungskammerbaugruppe zu und sind durch schematisch angedeutete Dichtungselemente 64 bezüglich dieser bzw. auch der Seitenwandungen 26, 28 gegen den Fluiddurchtritt des ersten Dämpferfluids abgeschlossen. Die einander paarweise zugeordneten und diametral gegenüberliegenden Verdrängungskammern 32, 32 bzw. 33, 33 sind durch in der Fig. 4 angedeutete Verbindungskanäle 66, 68 miteinander zum Fluidaustausch verbunden, so dass in diesen paarweise einander zugeordneten Verdrängungskammern im Wesentlichen der gleiche Druck des ersten Dämpferfluids vorherrscht.

Man erkennt in der Fig. 2 weiter die Zuordnung der verschiedenen Ausgleichszylinder 34 zu den Verdrängungskammern 32 bzw. 33. So stehen die beiden Verdrängungskammern 32, 32 über die Öffnungen 38 und die diesen zugeordneten Zwischenkammern 40 jeweils in Wirkverbindung mit zwei Ausgleichszylindern 34 bzw. Ausgleichskammern 36. Die beiden Verdrängungskammern 33, 33 stehen über die Öffnungen 38 und die diesem zugeordneten Zwischenkammern 40 in Verbindung mit drei bzw. vier Ausgleichszylindern 34.

Im Drehmomentübertragungsbetrieb verdrehen sich die Primärseite 20 und die Sekundärseite 44 bezüglich einander ausgehend von der beispielsweise in Fig. 2 dargestellten Neutral-Relativdrehlage, in welcher die Umfangsbegrenzungsvorsprünge 60 bzw. 62 einen Winkelabstand von etwa 90° zueinander aufweisen und die Verdrängungskammern 32, 32, 33, 33 beispielsweise im Wesentlichen die gleiche Umfangserstreckung aufweisen. Dabei nähern sich also jeweils zwei Umfangsbegrenzungsvorsprünge 60, 62 einander an. Dies kann einerseits zur Folge haben, dass bei übermäßig ansteigendem zu übertragendem Drehmoment diese Umfangsbegrenzungsvorsprünge gegeneinander anschlagen, andererseits besteht grundsätzlich die Möglichkeit, dass beispielsweise die sekundärseitigen Umfangsbegrenzungsvorsprünge 62 mit den daran vorgesehenen Dichtungselementen 64 die Öffnungen 38 zumindest teilweise überstreichen. Selbiges gilt für die primärseitigen Umfangsbegrenzungsvorsprünge 60 in Zuordnung zu den Kanälen 66, 68. Dabei kann kurzzeitig eine Fluidaustauschverbindung zwischen den beiden durch jeweils einen der Umfangsbegrenzungsvorsprünge 60 oder 62 begrenzten und in Umfangsrichtung unmittelbar aufeinander folgenden Verdrängungskammern 32, 33 entstehen. Auch ist das Überstreichen der Öffnungen durch die Dichtungselemente 64 ungünstig, da dies zu einer Bestätigung führen kann.

Um dem entgegenzuwirken ist erfindungsgemäß vorgesehen, dass zwischen den beiden Verdrängungskammerbaugruppen 24 bzw. 46 eine im Folgenden beschriebene Drehwinkelbegrenzungsfunktionanlität realisiert ist.

Wie man in den Fig. 3 und 4 erkennt, weist die zweite Verdrängungskammerbaugruppe 46 in ihren den beiden Seitenwandungen 26, 28 gegenüberliegenden bzw. von diesen überdeckten Stirnflächen 70, 72 jeweils über einen begrenzten Umfangswinkel von etwa 160° sich erstreckende Umfangsaussparungen 74, 76 auf. In Zuorndung zu jeder dieser Umfangsaussparungen 74, 76 weisen die beiden Stirnwandungen 26, 28 einen Eingriffsvorsprung 78, 80, 82, 84 auf. Diese können als separate Bauteile an den Stirnwandungen 26, 28 festgelegt sein, beispielsweise durch Vernietung oder Verschweißen, können gleichwohl jedoch auch als integraler Bestandteil, beispielsweise durch Umformen, Angießen oder spanabhebende Bearbeitung bereitgestellt werden.

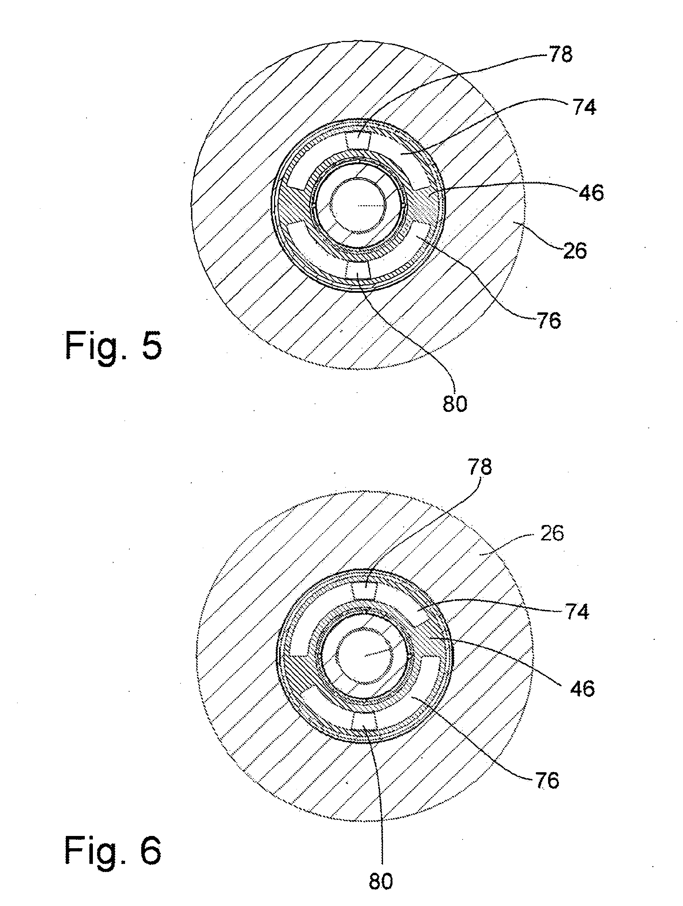

Wie die Fig. 5 dies zeigt, greifen die Eingriffsvorsprünge 78, 80 bei in der Neutral-Relativdrehlage der Fig. 2 bezüglich einander angeordneter Primärseite 20 und Sekundärseite 44 in die zugeordneten Umfangsaussparungen 74, 76 im Wesentlichen mittig ein, so dass in beiden Relativdrehrichtungen ausgehend von der Neutral-Relativdrehlage im Wesentlichen der gleiche Relativdrehwinkel zugelassen ist. Noch vor einem Relativdrehwinkel, in welchem eine ungewollte Wechselwirkung zwischen einem Dichtungselement und einer Öffnung bzw. auch den einander annähernden Umfangsbegrenzungsvorsprüngen entsteht, kommen die Eingriffsvorsprünge 78, 80, 82, 84 in Anlage an den jeweiligen Umfangsenden der Umfangsaussparungen 74, 76 und blockieren somit die Primärseite 20 und die Sekundärseite 44 gegen weitere Drehung.

Die Fig. 6 zeigt einen Fall, in welchem bei gleichwohl in der Neutral-Relativdrehlage angeordneter Primärseite 20 und Sekundärseite 44 die gezeigten Eingriffsvorsprünge 78, 80 nicht mittig in die zugeordneten Umfangsaussparungen 74, 76 eingreifen. Dies ist also ein Ausgestaltungsbeispiel, bei welchem das mögliche Relativdrehausmaß in den beiden Reltivdrehrichtungen nicht gleich gestaltet ist, also beispielsweise im Zugzustand ein größerer Relativdrehwinkel ermöglicht ist als im Schubzustand.

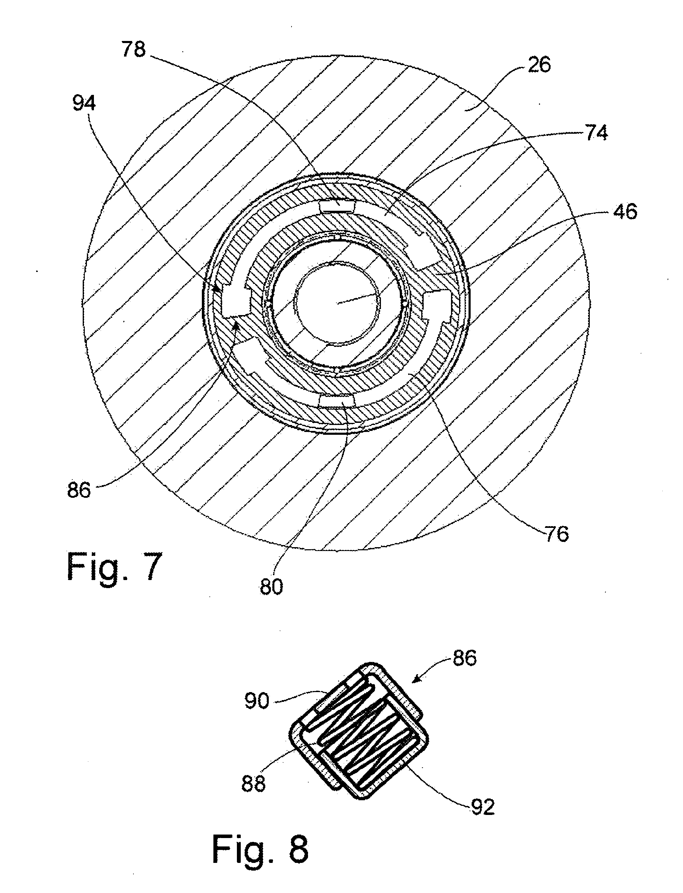

Die Fig. 8 zeigt eine Weiterbildung, bei welcher nicht nur für eine Relativdrehwinkelbegrenzung gesorgt ist, sondern auch ein gedämpfter Endanschlag erreicht wird. Zu diesem Zwecke ist an den Umfangsendbereichen der Umfangsaussparungen 74 ein in Fig. 8 erkennbarer elastisch wirksamer Anschlag 86 vorgesehen. Dieser umfasst beispielsweise eine Schraubendruckfeder 88 die in zwei bezüglich einander teleskopierbaren topfartigen Gehäuseschalen 90, 92 aufgenommen ist.

Wie anhand des Umfangsendbereichs 94 der Umfangsaussparung 74 beispielhaft erläutert, sind diese Umfangsaussparungen 74 im Bereich eines derartigen Umfangsendbereichs 94 etwas erweitert ausgebildet, so dass dort die elastischen Anschläge 86 eingesetzt werden können. Dabei kann der Einbau unter Vorspannung erfolgen. Bewegt sich der Eingriffsvorsprung 78 dann auf diesen Umfangsendbereich 94 zu, so belastet er den dort vorgesehenen Anschlag 86 in Umfangsrichtung. Eine Kompression tritt jedoch erst auf, wenn das Belastungsmoment bzw. die vom Eingriffsvorsprung 78 ausgeübte Kraft die Vorspannung übersteigt. Die Schraubendruckfeder 88 kann dann komprimiert werden, und zwar bis die maximale Teleskopierung der beiden Gehäuseschalen 90, 92 erreicht ist, die somit auch eine Überlastungsschutzfunktion für die Schraubendruckfeder 88 realisieren.

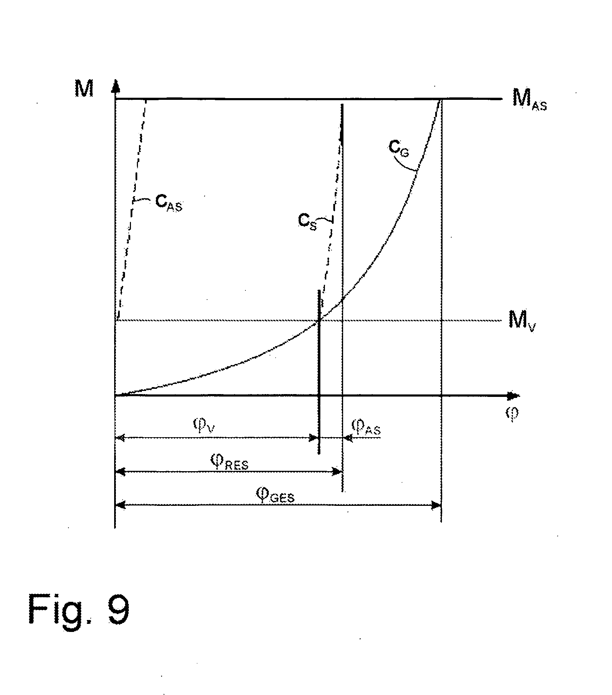

Die Funktion einer mit einer derartigen elastischen Anschlagsfunktion ausgestalteten Torsionsschwingungsdämpferanordnung 12 ist in Fig. 9 gezeigt. Man erkennt in Fig. 9 die progressive Kennlinie C_{G} der mit fluidischer Dämpfung bzw. Gaskompression wirksamen Torsionsschwingungsdämpferanordnung. Innerhalb des normalen Relativdrehwinkels, auch hier betrachtet ausgehend von der Neutral- zur Relativdrehstellung ϕ_{V}, ist im Wesentlichen nur die fluidische Dämpfung wirksam. Erreicht durch entsprechende Relativdrehung das übertragene Drehmoment den Wert Mv, welcher auch dem Vorspannmoment der elastischen Anschläge 86 entspricht, so wird dann durch Beaufschlagung vermittels jeweils eines der Eingriffsvorsprünge und dabei auftretender Belastung der Schraubendruckfeder/n auch die elastische Anschlagsfunktionalität wirksam, d.h., es wird der Kennlinie C_{G} des Gasfeder-Zweimassenschwungrads die Kennlinie C_{AS} der vorgespannt eingebauten Schraubendruckfeder/n 88 überlagert. Es ergibt sich somit eine Gesamtkennlinie C_{S}, die bei Erreichen des Winkels ϕ_{V} wirksam wird. Diese Kennlinie C_{S} liegt dann innerhalb eines zusätzlichen Winkelbereichs ϕ_{AS} vor, in welchem zusätzlich auch noch die zu komprimierenden Schraubendruckfedern 88 wirksam werden. Der somit mögliche Relativdrehwinkel zwischen Primärseite 20 und Sekundärseite 44, der durch die Drehwinkelbegrenzungsfunktion bei im Wesentlichen vollständig komprimierten Anschlägen 86 erhalten werden kann, ist definiert durch den Winkel ϕ_{RES}, welcher, wie es die Fig. 9 zeigt, noch unter dem für das Gasfeder-Zweimassenschwungrad grundsätzlich möglichen Relativdrehwinkel ϕ_{GES} liegt, welcher letztendlich begrenzt ist durch die in Umfangsrichtung aneinander sich anlegenden Umfangsbegrenzungsvorsprünge 60, 62.

Es sei darauf hingewiesen, dass die Fig. 9 ein Beispiel zeigt, bei welchem die fluidische Dämpfungsfunktionalität einerseits und die Vorspannung der Anschläge 86 andererseits so aufeinander abgestimmt sind, dass dann, wenn der Relativdrehwinkel ϕ_{V} erreicht wird, das dann anliegende Moment im Wesentlichen dem Vorspannmoment M_{V} der Anschläge 86 entspricht. Würde dieses Vorspannmoment der Anschläge 86 so gewählt werden, dass es höher liegt, so wäre ein Drehmomentbereich gegeben, in welchem tatsächlich keine Relativdrehung stattfinden wird. Erst dann, wenn bei weiter ansteigendem Drehmoment das dann vorhandene Vorspannmoment erreicht bzw. überschritten wird, könnte im Zuge der Kompression der Schraubendruckfedern 88 eine weitere Relativdrehung stattfinden. Würde das Vorspannmoment so gewählt werden, dass es unter dem bei Wirksamwerden der Anschläge 86 liegenden, über die Torsionsschwingungsdämpferanordnung zu übertragende Drehmoment ist, so würden bei dann nicht weiter ansteigendem Drehmoment die Schraubendruckfedern 88 belastet, bis ein Momenten- bzw. Kraftausgleich vorhanden ist.

Aus dem Diagramm der Fig. 9 erkennt man weiter, dass dann, wenn bei auftretenden Drehmomentschwankungen bzw. stark ansteigendem Drehmoment innerhalb des normalen Wirkbereichs ϕ_{V} die auf Druck belasteten Verdrängungskammern ausreichend schnell mit unter Druck stehendem ersten Dämpferfluid über die Drehdurckführung 52 gespeist werden, einer weiteren Relativdrehung also nachhaltig entgegengewirkt werden kann, nur die fluidische Dämpfungsfunktionalität wirksam ist. Nur dann, wenn eine entsprechend schnelle Fluidnachfuhr nicht möglich ist oder möglicherweise eine Defekt in der Druckfluidversorgung auftritt, werden die Anschläge 86 wirksam und es ergibt sich die Gesamtkennlinie C_{S}, die entweder aus einer Überlagerung von elastischer Federsteifigkeit und Gaskompression entsteht oder beispielsweise bei defekter Druckfluidversorgung im Wesentlichen auch nur durch die elastische Rückstellkraft der Anschläge 86 bereitgestellt sein kann.

Es sei noch weiter darauf hingewiesen, dass diese elastischen Anschläge 86 im Falle von Schraubendruckfedern im Wesentlichen mit linearer Federkennlinie arbeiten. Werden hier beispielsweise Stapel kleiner Tellerfedern oder dergleichen eingesetzt, ist es je nach Einbaulage auch möglich, eine degressive oder eine progressive Kennlinie C_{AS} zu erzeugen.

Es sei darauf hingewiesen, dass bei den vorangehend beschriebenen Ausgestaltungsformen nicht notwendigerweise im Bereich beider Seitenwandungen 26, 28 für eine derartige Drehwinkelbegrenzung gesorgt sein muss, wenngleich auf Grund einer gleichmäßigen Belastung die vorangehend beschriebene Ausgestaltungsform besonders vorteilhaft ist. Auch ist es möglich, bei zumindest einer der Seitenwandungen die Umfangsaussparungen an der Stirnwandung vorzusehen und an der zweiten Verdrängungskammerbaugruppe dann in Zuordnung dazu einen entsprechenden Vorsprung vorzusehen. Auch sei darauf hingewiesen, dass es abhängig von dem erforderlichen Drehwinkelbereich selbstverständlich die Länge der Umfangsaussparungen angepasst werden kann und ggf. auch mehr als die zwei gezeigten Umfangsaussparungen bei einer der Seitenwandungen bzw. der entsprechenden Seitenfläche der zweiten Verdrängungskammerbaugruppe realisiert werden können.

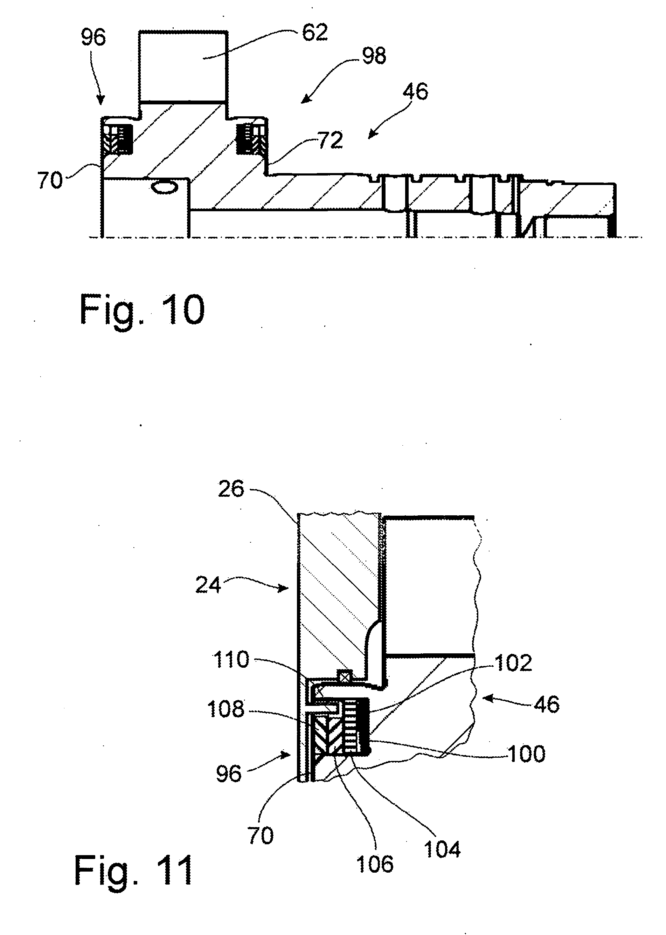

Die Fig. 10 bis 12 zeigen einen weiteren Aspekt der vorliegenden Erfindung, gemäß welchem zwischen den beiden Verdrängungskammerbaugruppen eine Reibeinrichtung wirksam ist. Diese umfasst zwei in Fig. 10 erkennbare Reibeinrichtungsbereiche 96, 98, die im dargestellten Ausgestaltungsbeispiel wieder an den jeweiligen Seitenwandungen 26 bzw. 28 gegenüberliegenden Seitenflächen 70, 72 der zweiten Verdrängungskammerbaugruppe 26 vorgesehen und wirksam sind.

Wie die vergrößerte Darstellung der Fig. 11 beispielhaft anhand des Reibeinrichtungsbereichs 96 zeigt, ist in der zweiten Verdrängungskammerbaugruppe 46 in axialer Richtung zur Seitenfläche 70 offen eine Aufnahmeaussparung 100 gebildet. Diese ist in Umfangsrichtung vorzugsweise durchgehend ausgebildet, bildet also eine zur Seitenfläche 70 offene Ringnut. An einem Nutboden stützt sich ein beispielsweise als Tellerfeder oder Wellfeder ausgebildetes Vorspannelement 102 axial ab und beaufschlagt einen Stützring 104. Dieser kann so dimensioniert sein, dass er in radialer Richtung sich im Wesentlichen über die gesamte Erstreckung der Aussparung 100 erstreckt, axial grundsätzlich jedoch unter der Vorspannung des Vorspannelements 102 bewegbar sein kann.

Auf den Stützring 104 folgt ein Reibring 106. Mit seiner dem Stützring 104 zugewandten Seitenfläche liegt der Reibring 106 am Stützring 104 an und gleitet somit bei nachfolgend noch beschriebener Relativdrehung zwischen Primärseite und Sekundärseite an im Stützring 104 unter Erzeugung einer Reibwechselwirkung ab. Auf den Reibring 106 folgt ein als Widerlagerelement wirksamer Abschlussring 108. Dieser wird, nachdem das Vorspannelement 102, der Stützring 104 und der Reibring 106 in die Aussparung 100 eingelegt worden sind, ebenfalls in die Aussparung 100 eingesetzt und mit der zweiten Verdrängungskammerbaugruppe 46 form-, kraft- oder materialschlüssig verbunden. Beispielsweise kann der Abschlussring 108 mit derartiger Innenabmessung ausgebildet sein, dass er unter Presspassung in die Aussparung 100 eingesetzt werden kann. Alternativ oder zusätzlich kann ein Festlegen durch Verschweißen erfolgen. In axialer Richtung schließt vorzugsweise der Abschlussring 108 dann bündig mit der Seitenfläche 70 der zweiten Verdrängungskammerbaugruppe ab.

Ein an der gegenüberliegenden Seitenwandung 26 vorgesehener Eingriffsvorsprung 110 greift axial in die Aussparung 100 ein und übergreift dabei den Abschlussring 108. Der Eingriffsvorsprung 110 erstreckt sich also bis in den Bereich des Reibrings 106 und tritt somit in Umfangsmitnahmewechselwirkung mit diesem.

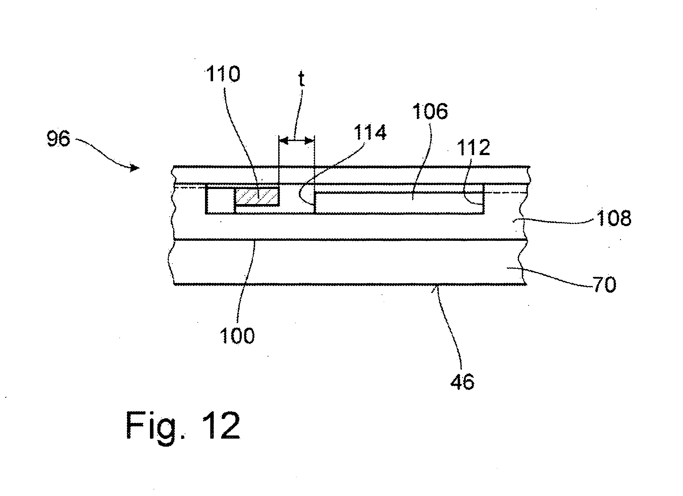

Ein Beispiel hierzu ist in Fig. 12 gezeigt. Man erkennt in axialer Ansicht die Stirnseite 70 der zweiten Verdrängungskammerbaugruppe 46 und die darin axial, also zur Zeichenebene offene Aussparung. Man erkennt weiterhin den Abschlussring 108, der beispielsweise so dimensioniert sein kann, dass er sich über die gesamte radiale Breite der Aussparung 100 erstreckt, so dass er auch im Außenumfangsbereich unter Presspassung eingesetzt werden kann. In Umfangsrichtung kann zum Durchgriff des Eingriffsvorsprungs 110 und in Zuordnung zu diesem der Abschlussring 108 eine Umfangsaussparung 112 aufweisen. Durch diese Umfangsaussparung 112 erstreckt sich der Eingriffsvorsprung 110 hindurch bis in den Bereich einer entsprechenden Mitnahmeaussparung 114 des in der Ansicht der Fig. 12 hinter dem Abschlussring 108 liegenden Reibrings 106. Bewegt sich der Eingriffsvorsprung 110 bei Relativdrehung der Primärseite bezüglich der Sekundärseite in Umfangsrichtung, bei der linearen Abwicklung in Fig. 12 also beispielsweise von rechts nach links, so nimmt dadurch die Wechselwirkung mit dem Reibring 106 diesen zur Umfangsbewegung mit. Der Reibring 106 gleitet dabei unter Erzeugung einer Reibwechselwirkung und unter der Vorspannlast des Vorspannelements 110 entlang der ihm gegenüberliegenden Reiboberflächen des Stützrings 104 und des Abschlussrings 108.

Da die Umfangsaussparung 112 im Abschlussring 108, die bei dieser Ausgestaltungsform sekundärseitig, also im Bereich der zweiten Verdrängungskammerbaugruppe 46 angeordnet ist, in Umfangsrichtung begrenzt ist, bildet sie in Zusammenwirkung mit dem in diese Umfangsaussparung 112 eingreifenden bzw. durch diese hindurchgreifenden Eingriffsvorsprung 110 wieder eine Drehwinkelbegrenzungsfunktion aus. Das heißt, der Eingriffsvorsprung 110 kann sich lediglich zusammen mit der Primärseite bezüglich der Sekundärseite und somit der zweiten Verdrängungskammerbaugruppe 46 im Umfangserstreckungsausmaß der Umfangsaussparung 112 bewegen. Ist bei dieser Ausgestaltungsform die Umfangsbewegungsbegrenzung nicht erwünscht, so kann entweder die Umfangsaussparung 112 mit derartiger Umfangserstreckung ausgebildet sein, dass eine Drehwinkelbegrenzung durch andere Baugruppen erfolgt, oder kann in Umfangsrichtung durchgehend sein, was bedeutet, dass der Abschlussring 108 sich nicht über die gesamte radiale Breite der Aussparung 100 erstreckt.

In der Fig. 12 erkennt man weiter, dass die Umfangserstreckung der Mitnahmeaussparung 114 größer ist, als diejenige des Eingriffsvorsprungs 110. Es ist also ein Totgang bzw. Bewegungsspiel t vorhanden, was zu einer bei Bewegungsrichtungsumkehr verschleppt wirksam werdenden Reibeinrichtung führt. Dies bedeutet, dass insbesondere im Bereich kleinerer Drehmomentschwankungen eine Bewegung des Eingriffsvorsprungs 110 bezüglich des Reibrings 106 im Bereich dieses Totgangs t möglich ist, ohne dass der Reibeinrichtungsbereich 96 wirksam wird. Erst wenn größere Drehmomentschwankungen oder Variationen auftreten, wird der Reibring 106 zur Umfangsbewegung mitgenommen und erzeugt eine Reibkraft, die dann zusätzlich zur Schwingungsenergieabfuhr beiträgt. Aus diesem Grund ist es durchaus denkbar, dass insbesondere unter der Berücksichtigung, dass durch die fluidische Dämpfungswirkung ebenfalls eine Rückstellkraft erzeugt wird, auf eine mechanische Drehwinkelbegrenzung verzichtet wird.

Auch zu dieser Ausgestaltungsvariante sei darauf hingewiesen, dass nicht notwendigerweise an beiden axialen Seiten ein derartiger Reibeinrichtungsbereich vorgesehen sein muss und dass nicht notwendigerweise der bzw. die Reibeinrichtungsbereiche mit den in der Fig. 11 erkennbaren Komponenten in der zweiten Verdrängungskammerbaugruppe vorgesehen sein müssen. Grundsätzlich wäre es auch denkbar, die Aussparung 100 in einer Stirnwandung auszugestalten und an der gegenüberliegenden Seitenfläche der zweiten Verdrängungskammerbaugruppe einen Eingriffsvorsprung vorzusehen. Weiterhin ist es denkbar, aus Gründen des Vermeidens von Unwuchten an einer Stirnwandung oder dem entsprechenden Bereich der zweiten Verdrängungskammerbaugruppe zwei in einem Winkelabstand von 180° angeordnete Eingriffsvorsprünge anzuordnen, die dann mit dem gleichen Reibring zusammenwirken. An Stelle eines Reibrings könnte selbstverständlich auch an mehrere in Umfangsrichtung aufeinander folgende Reibelemente gedacht werden, die dann jeweils durch diesen einzeln zugeordnete Eingriffsvorsprünge anzusteuern sind. Auch sei darauf hingewiesen, dass beispielsweise eine Kombination der vorangehend beschriebenen Ausgestaltungsvarianten dadurch denkbar ist, dass an einer axialen Seite zwischen der zweiten Verdrängungskammerbaugruppe und der zugeorndeten Stirnwandung die in den Fig. 10 bis 12 gezeigte Reibeinrichtung bzw. ein entsprechender Reibeinrichtungsbereich vorgesehen ist, während an der anderen axialen Seite dann eine Drehwinkelbegrenzung realisiert ist, wie in den Fig. 3 bis 8 gezeigt. Dabei könnte dann bei dem Reibeinrichtungsbereich auf die Funktionalität einer Drehwinkelbegrenzung verzichtet werden.

## Patentansprüche

1. Torsionsschwingungsdämpferanordnung, umfassend eine Primärseite (20) und eine gegen die Wirkung einer Dämpferfluidanordnung um eine Drehachse (A) bezüglich der Primärseite (20) drehbare Sekundärseite (44), wobei die Dämpferfluidanordnung in wenigstens einer Verdrängungskammer (32, 33) ein erstes Dämpferfluid mit geringerer Kompressibilität und in wenigstens einer Ausgleichskammer (36) ein zweites Dämpferfluid mit höherer Kompressibilität aufweist, wobei bei durch Drehung der Primärseite (20) bezüglich der Sekundärseite (44) ausgelöster Verringerung des Volumens wenigstens einer Verdrängungskammer (32, 33) und dabei Verdrängung von Fluid aus dieser das zweite Dämpferfluid in wenigstens einer Ausgleichskammer (36) komprimiert wird, wobei die wenigstens eine Verdrängungskammer (32, 33) begrenzt ist durch eine erste Verdrängungskammerbaugruppe (24), welche die wenigstens eine Verdrängungskammer (32, 33) mit Stirnwandungen (26, 28) in beiden axialen Richtungen und mit einer Umfangswandung (30) in einer radialen Richtung begrenzt, und durch eine zweite Verdrängungskammerbaugruppe (46), welche bezüglich der ersten Verdrängungskammerbaugruppe (24) um die Drehachse (A) drehbar ist und die wenigstens eine Verdrängungskammer (32, 33) in der anderen radialen Richtung begrenzt, **dadurch gekennzeichnet, dass** an einer Baugruppe von zweiter Verdrängungskammerbaugruppe und wenigstens eine der Stirnwandungen wenigstens eine Umfangsaussparung (74, 76; 112) vorgesehen ist und an der anderen Baugruppe von zweiter Verdrängungskammerbaugruppe und wenigstens eine der Stirnwandungen in Zuordnung zu der wenigstens einen Umfangsaussparung ein Eingriffsvorsprung (78, 80, 82, 84; 110) vorgesehen ist zur Erzeugung einer Drehwinkelbegrenzungsfunktion oder/und einer Reibeinrichtungsfunktion zwischen den beiden Verdrängungskammerbaugruppen (24, 46).

2. Torsionsschwingungsdämpferanordnung nach Anspruch 1, **dadurch gekennzeichnet, dass** die wenigstens eine Umfangsaussparung (74, 76; 112) an einer Stirnfläche der einen Baugruppe ausgebildet ist.

3. Torsionsschwingungsdämpferanordnung nach Anspruch 1 oder 2, **dadurch gekennzeichnet, dass** die wenigstens eine Umfangsaussparung (74, 76; 112) eine begrenzte Umfangserstreckung aufweist.

4. Torsionsschwingungsdämpferanordnung nach Anspruch 3, **dadurch gekennzeichnet, dass** im Bereich wenigstens eines Umfangsendes (94) wenigstens einer Umfangsaussparung (74, 76) ein elastischer Anschlag (86) für einen Eingriffsvorsprung (78, 80, 82, 84) vorgesehen ist.

5. Torsionsschwingungsdämpferanordnung nach Anspruch 4, **dadurch gekennzeichnet, dass** der elastische Anschlag (86) ein Federelement (88) umfasst.

6. Torsionsschwingungsdämpferanordnung nach Anspruch 5, **dadurch gekennzeichnet, dass** das Federelement (88) vorgespannt eingebaut ist.

7. Torsionsschwingungsdämpferanordnung nach einem der Ansprüche 1 bis 6, **dadurch gekennzeichnet, dass** in Zuordnung zu wenigstens einem Eingriffsvorsprung (110) der anderen Baugruppe an der einen Baugruppe ein Reibelement (106) vorgesehen ist, welches durch den Eingriffsvorsprung (110) zur Bewegung in Umfangsrichtung entlang wenigstens einer Gegenreibfläche mitnehmbar ist.

8. Torsionsschwingungsdämpferanordnung nach Anspruch 7, **dadurch gekennzeichnet, dass** an der einen Baugruppe eine Reibelementenaufnahmeaussparung (100) vorgesehen ist.

9. Torsionsschwingungsdämpferanordnung nach Anspruch 8, **dadurch gekennzeichnet, dass** die Reibelementenaufnahmeaussparung (100) durch ein vorzugsweise eine Gegenreibfläche bereitstellendes und durch den wenigstens einen Eingriffsvorsprung (110) zur Wechselwirkung desselben mit dem zugeordneten Reibelement (106) übergriffenes Abschlusselement (108) teilweise abgeschlossen ist.

10. Torsionsschwingungsdämpferanordnung nach Anspruch 9, **dadurch gekennzeichnet, dass** das Abschlusselement (108) die wenigstens eine Umfangsaussparung (100) begrenzt.

11. Torsionsschwingungsdämpferanordnung nach einem der Ansprüche 7 bis 10, **dadurch gekennzeichnet, dass** der wenigstens eine Eingriffsvorsprung (110) mit dem zugehörigen Reibelement (106) mit Umfangsbewegungsspiel zusammenwirkt.

12. Torsionsschwingungsdämpferanordnung nach einem der Ansprüche 1 bis 10, **dadurch gekennzeichnet, dass** die wenigstens eine Verdrängungskammer (32, 33) in einer ersten Umfangsrichtung durch einen der ersten Verdrängungskammerbaugruppe (24) vorgesehenen Umfangsbegrenzungsvorsprung (60) und in einer zweiten Umfangsrichtung durch einen an der zweiten Verdrängungskammerbaugruppe (46) vorgesehenen Umfangsbegrenzungsvorsprung (62) begrenzt ist.

## Claims

1. Torsional vibration damper arrangement, comprising a primary side (20) and a secondary side (44) rotatable about an axis of rotation (A) with respect to the primary side (20) counter to the action of a damper fluid arrangement, the damper fluid arrangement having, at least in one displacement chamber (32, 33), a first damper fluid of lower compressibility, and, in at least one compensating chamber (36), a second damper fluid of higher compressibility, the second damper fluid in at least one compensating chamber (36) being compressed when a reduction in the volume of at least one displacement chamber (32, 33) is triggered by the rotation of the primary side (20) with respect to the secondary side (44) and when fluid is in this case displaced out of the said displacement chamber, the at least one displacement chamber (32, 33) being delimited by a first displacement-chamber subassembly (24), which delimits the at least one displacement chamber (32, 33) in both axial directions by means of end walls (26, 28) and in one radial direction by means of a circumferential wall (30), and by a second displacement-chamber subassembly (46), which is rotatable about the axis of rotation (A) with respect to the first displacement-chamber subassembly (24) and which delimits the at least one displacement chamber (32, 33) in the other radial direction, **characterized in that** at least one circumferential clearance (74, 76; 112) is provided on one subassembly of the second displacement-chamber subassembly and at least one of the end walls, and an engagement projection, (78, 80, 82, 84; 110) is provided, assigned to the at least one circumferential clearance, on the other subassembly of the second displacement-chamber subassembly and at least one of the end walls, in order to bring about a rotary-angle limitation function and/or a frictional set-up function between the two displacement-chamber subassemblies (24, 46).

2. Torsional vibration damper arrangement according to Claim 1, **characterized in that** the at least one circumferential clearance (74, 76; 112) is formed on one end face of the one subassembly.

3. Torsional vibration damper arrangement according to Claim 1 or 2, **characterized in that** the at least one circumferential clearance (74, 76; 112) has as limited circumferential extent.

4. Torsional vibration damper arrangement according to Claim 3, **characterized in that** an elastic stop (86) for an engagement projection (78, 80, 82, 84) is provided in the region of at least one circumferential end (94) of at least one circumferential clearance (74, 76).

5. Torsional vibration damper arrangement according to Claim 4, **characterized in that** the elastic stop (86) comprises a spring element (88).

6. Torsional vibration damper arrangement according to Claim 5, **characterized in that** the spring element (88) is installed, prestressed.

7. Torsional vibration damper arrangement according to one of Claims 1 to 6, **characterized in that** a friction element (106) is provided, assigned to at least one engagement projection (110) of the other subassembly, on the one subassembly and can be driven by the engagement projection (110) to move in the circumferential direction along at least one frictional counterface.

8. Torsional vibration damper arrangement according to Claim 7, **characterized in that** a friction-element reception clearance (100) is provided on the one subassembly.

9. Torsional vibration damper arrangement according to Claim 8, **characterized in that** the friction-element reception clearance (100) is partially closed off by means of a closing-off element (108) which preferably provides a frictional counterface and which is overlapped by the at least one engagement projection (110) for the interaction of the latter with the assigned friction element (106).

10. Torsional vibration damper arrangement according to Claim 9, **characterized in that** the closing-off element (108) delimits the at least one circumferential clearance (100).

11. Torsional vibration damper arrangement according to one of Claims 7 to 10, **characterized in that** the at least one engagement projection (110) cooperates with the associated friction element (106) with circumferential movement play.

12. Torsional vibration damper arrangement according to one of Claims 1 to 10, **characterized in that** the at least one displacement chamber (32, 33) is delimited in a first circumferential direction by a circumferential limitation projection (60) provided on the first displacement chamber subassembly (24) and in a second circumferential direction by a circumferential limitation projection (62) provided on the second displacement-chamber subassembly (46).

## Revendications

1. Agencement d'amortisseur de vibrations torsionnelles, comprenant un côté primaire (20) et un côté secondaire (44) pouvant tourner autour d'un axe de rotation (A) par rapport au côté primaire (20) à l'encontre de l'action d'un agencement de fluide d'amortissement, l'agencement de fluide d'amortissement présentant, dans au moins une chambre de refoulement (32, 33), un premier fluide d'amortissement de faible compressibilité, et dans au moins une chambre de compensation (36) un deuxième fluide d'amortissement de plus grande compressibilité, le deuxième fluide d'amortissement étant comprimé dans au moins une chambre de compensation (36) lors d'une réduction, engendrée par la rotation du côté primaire (20) par rapport au côté secondaire (44), du volume d'au moins une chambre de refoulement (32, 33) et ainsi lors du refoulement de fluide hors de celle-ci, l'au moins une chambre de refoulement (32, 33) étant limitée par un premier module de chambre de refoulement (24), qui limite l'au moins une chambre de refoulement (32, 33) avec des parois frontales (26, 28) dans les deux directions axiales et avec une paroi périphérique (30) dans une direction radiale, et par un deuxième module de chambre de refoulement (46) qui peut tourner autour de l' axe de rotation (A) par rapport au premier module de chambre de refoulement (24) et qui limite l'au moins une chambre de refoulement (32, 33) dans l'autre direction radiale, **caractérisé en ce que** l'on prévoit au moins un évidement périphérique (74, 76 ; 112) sur un module du deuxième module de chambre de refoulement et au moins l'une des parois frontales, et une saillie d'engagement (78, 80, 82, 84 ; 110) est prévue sur l'autre module du deuxième module de chambre de refoulement et au moins l'une des parois frontales en association avec l'au moins un évidement périphérique, pour produire une fonction de limitation de l'angle de rotation et/ou une fonction de dispositif de friction entre les deux modules de chambre de refoulement (24, 46).

2. Agencement d'amortisseur de vibrations torsionnelles selon la revendication 1, **caractérisé en ce que** l'au moins un évidement périphérique (74, 76 ; 112) est réalisé sur une surface frontale d'un module.

3. Agencement d'amortisseur de vibrations torsionnelles selon la revendication 1 ou 2, **caractérisé en ce que** l'au moins un évidement périphérique (74, 76 ; 112) présente une étendue périphérique limitée.

4. Agencement d'amortisseur de vibrations torsionnelles selon la revendication 3, **caractérisé en ce que** dans la région d'au moins une extrémité périphérique (94) d'au moins un évidement périphérique (74, 76) est prévue une butée élastique (86) pour une saillie d'engagement (78, 80, 82, 84).

5. Agencement d'amortisseur de vibrations torsionnelles selon la revendication 4, **caractérisé en ce que** la butée élastique (86) comprend un élément de ressort (88).

6. Agencement d'amortisseur de vibrations torsionnelles selon la revendication 5, **caractérisé en ce que** l'élément de ressort (88) est monté sous forme précontrainte.

7. Agencement d'amortisseur de vibrations torsionnelles selon l'une quelconque des revendications 1 à 6, **caractérisé en ce qu'**en association avec au moins une saillie d'engagement (110) de l'autre module, on prévoit un élément de friction (106) sur l'un des modules, lequel peut être entraîné en même temps par la saillie d'engagement (110) pour son déplacement dans la direction périphérique le long d'au moins une surface de friction conjuguée.

8. Agencement d'amortisseur de vibrations torsionnelles selon la revendication 7, **caractérisé en ce que** l'on prévoit sur l'un des modules un évidement de réception d'élément de friction (100).

9. Agencement d'amortisseur de vibrations torsionnelles selon la revendication 8, **caractérisé en ce que** l'évidement de réception d'élément de friction (100) est terminé par un élément de terminaison (108) fournissant de préférence une surface de friction conjuguée et engagé par le dessus par l'au moins une saillie d'engagement (110) en vue de son interaction avec l'élément de friction associé (106).

10. Agencement d'amortisseur de vibrations torsionnelles selon la revendication 9, **caractérisé en ce que** l'élément de terminaison (108) limite l'au moins un évidement périphérique (100).

11. Agencement d'amortisseur de vibrations torsionnelles selon l'une quelconque des revendications 7 à 10, **caractérisé en ce que** l'au moins une saillie d'engagement (110) coopère avec l'élément de friction associé (106) avec un jeu de déplacement périphérique.

12. Agencement d'amortisseur de vibrations torsionnelles selon l'une quelconque des revendications 1 à 10, **caractérisé en ce que** l'au moins une chambre de refoulement (32, 33) est limitée, dans une première direction périphérique, par une saillie de limitation périphérique (60) prévue sur le premier module de chambre de refoulement (24), et dans une deuxième direction périphérique, par une saillie de limitation périphérique (62) prévue sur le deuxième module de chambre de refoulement (46).
